# EUROPÄISCHE PATENTSCHRIFT

(11) **EP 3 464 410 B1**
(45) Veröffentlichungstag und Bekanntmachung des Hinweises auf die Patenterteilung: **22.04.2020**
(21) Anmeldenummer: 17728489.0
(22) Anmeldetag: 31.05.2017
(51) Int. Cl.: C08G 18/76, C08G 18/12, C08G 18/48, C08J 9/12, C08J 9/14, C08G 101/00

(54) **REAKTIONSSYSTEM FÜR EINEN 1-K POLYURETHANSCHAUM**
REACTION SYSTEM FOR A 1-K POLYURETHANE FOAM
SYSTEME DE REACTION POUR UNE MOUSSE POLYURETHANE MONOCOMPOSANT

(30) Priorität: 31.05.2016 EP 16172105
(43) Veröffentlichungstag der Anmeldung: 10.04.2019
(73) Patentinhaber: Covestro Deutschland AG, 51373 Leverkusen (DE)
(72) Erfinder: ARNTZ, Hans-Detlef, 51491 Overath (DE); FELSKE, Ernst, 41464 Neuss (DE); KLASEN, Patrick, 52391 Vettweiß (DE); MICHELS, Erhard, 51061 Köln (DE); FROMMONT, Marion, 51377 Leverkusen (DE); ALBERS, Reinhard, 51375 Leverkusen (DE)
(74) Vertreter: Levpat
(86) Internationale Anmeldenummer: PCT/EP2017/063120
(87) Internationale Veröffentlichungsnummer: WO 2017/207609

(56) Entgegenhaltungen:
- WO-A1-2015/082460

## Beschreibung

Die vorliegende Erfindung betrifft ein Einkomponenten (1K)-Reaktionssystem zur Herstellung von Polyurethan- Hartschaumstoffen mit besonders guten Brandeigenschaften, Verfahren zu dessen Herstellung und deren Verwendung. Die Erfindung betrifft auch die aus dem erfindungsgemäßen Einkomponenten-Reaktionssystem hergestelllten Hartschäume.

Das erfindungsgemäße Einkomponenten-Reaktionssystem umfasst die folgenden Bestandteile:
A) eine organische Polyisocyanatkomponente, die teilweise als Präpolymer vorliegt (im folgenden genannt "Semipräpolymer"),
B) eine isocyanatreaktive Komponente, deren isocyanatreaktive funktionelle Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel, sowie
F) gegebenenfalls Hilfs-, Zusatzstoffe und
wobei das Semipräpolymer durch Umsetzung von
einer organischen Polyisocyanatkomponente A.1), welche zu mindestens 80 Gew.-% aus den monomeren Diphenylmethandiisocyanaten 2,4'-MDI, 2,2'-MDI und/oder 4,4'-MDI (im Folgenden einzeln oder gemeinsam "monomeres MDI" oder "mMDI" genannt) besteht, und
einer Polyolkomponente A.2) mit einer Funktionalität Fₙ (bezogen auf die Zerewitinoff-reaktiven Wasserstoffatome in der Polyolkomponente) von > 2,0 bis < 3,0 und einer OH-Zahl von 28 - 350 mg KOH/g gebildet wird, und
wobei die organische Polyisocyanatkomponente A) weiterhin dadurch gekennzeichnet ist, dass der Gehalt an freien, nicht mit Polyol reagierten Isocyanaten > 1 bis < 25 Gew.-% beträgt, und
der NCO-Gehalt > 7,5 bis ≤ 13 Gew.-%, insbesondere > 8 bis ≤ 13 Gew.-%, bezogen auf das Gesamtgewicht der Komponente A), beträgt.

Die Erfindung betrifft ferner ein Verfahren zur Herstellung eines Einkomponenten-Reaktionssystems, ein Verfahren zur Herstellung von Polyurethan-Hartschaumstoffen aus einem Einkomponenten-Reaktionssystem, einen Hartschaumstoff, erhältlich aus einem Einkomponenten-Reaktionssystem, die Verwendung eines Einkomponenten-Reaktionssystems als 1-K Montageschaum, sowie einen Druckbehälter enthaltend ein Reaktionssystem und ein Treibmittel.

Die Herstellung von Polyurethanschäumen aus Einwegdruckbehältern ist bekannt. Dabei wird ein isocyanatgruppenhaltiges Präpolymer durch Reaktion von Polyolen unter Zusatz von Schaumstabilisatoren und Katalysatoren sowie gegebenenfalls von Weichmachern, Flammschutzmitteln, Vernetzern und weiteren Zusatzstoffen mit organischen Di- und/oder Polyisocyanaten hergestellt. Diese Umsetzung erfolgt normalerweise in Gegenwart von verflüssigtem Treibgas in einem Druckbehälter. Nach Abschluss der Präpolymerbildung kann der Schaum dann über ein Ventil dosiert ausgetragen werden. Dabei besitzt der Schaum zuerst eine sahnige Konsistenz und härtet dann anschließend durch Einwirken der Umgebungsfeuchtigkeit , z.B. aus der Luft unter Volumenvergrößerung, aus. Bei solchen Schäumen spricht man daher von Einkomponentenschäumen (1K-Schäume).

Um die gewünschten Endeigenschaften des Schaumes wie z.B. Härte, Zellbeschaffenheit zu erhalten, wird mit einem deutlichen Überschuss des Isocyanats gegenüber der Polyolkomponenten gearbeitet. Auf diese Weise wird die sogenannte Vorverlängerung und damit die Molekulargewichtsverteilung des Präpolymers reguliert. Je geringer die Vorverlängerung, desto enger die Molekulargewichtsverteilung, desto präziser einstellbar die Endeigenschaften des ausgehärteten PUR-Schaums.

Ein großes Anwendungsgebiet für 1K-Schäume ist die Bauindustrie, wo gewisse Brandschutznormen zu erfüllen sind. Die meisten Produkte enthalten polymeres MDI, d.h. Mischungen aus monomerem MDI und den höherkernigen, homologen Polyphenyl-polymethylen-polyisocyanaten, und weiterhin ein flüssiges Flammschutzmittel, z.B. Triethylphosphat (TEP) und/oder Tris(2-chlorpropyl)phosphat (TCPP), um die Anforderungen für eine B2 - Klassifizierung nach der Brandschutznorm DIN 4102-1 (1998) zu erfüllen. Die genannten Flammschutzmittel sind jedoch im Schaum nicht chemisch gebunden und können mit der Zeit ausdiffundieren, wodurch sich die Brandeigenschaften ändern. Zum anderen stehen diese Flammschutzmittel aufgrund ihrer zunehmenden Verbreitung in der Umwelt und teilweise gesundheitsschädlicher Wirkung in der Kritik. In WO 2015/082460 wird ein 1K-Reaktionssystem beschrieben, welches auf einem monomerarmen Polyisocyanat - Prepolymer mit einem NCO-Gehalt von weniger als 7,5 Gew.-% basiert und dessen Gehalt an freiem monomerem Isocyanat durch Destillation auf höchstens 1 Gew.-% reduziert wird. Unter bestimmten Bedingungen, nämlich bei Kombination von Ethylenoxid-haltigen Polyolen, Polyesterpolyolen oder bromierten einbaubaren Flammschutzmitteln mit einem bestimmten Stabilisator, können mit diesen Systemen auch ohne Zugabe nicht einbaubarer Flammschutzmittel 1K-Schäume mit B2-Brandverhalten erhalten werden. Nachteilig an der Verwendung von Isocyanaten auf Basis MDI mit einem niedrigen Monomergehalt von < 1 Gew.-% ist allerdings, dass für seine Herstellung ein zusätzlicher Destillationsschritt notwendig ist und die hohe Viskosität des Isocyanats die Auswahl der Polyolkomponente beschränkt.

Der Einsatz von polymerem MDI wird beispielsweise in der DE4443432 offenbart, welche eine unter Druck stehende, Treibmittel enthaltende Isocyanat-Semipräpolymermischung, erhältlich durch Umsetzung eines Polyisocyanats mit mindestens einer Polyhydroxyverbindung in Gegenwart von Monoalkoholen oder Hydroxyketonen mit 1 - 25 Kohlenstoffatomen beschreibt. In den Beispielen wird ein polymeres MDI mit einem Gehalt von 48 % monomerem MDI eingesetzt. Brandeigenschaften werden nicht offenbart.

Ausgehend vom Stand der Technik bestand die Aufgabe der vorliegenden Erfindung darin, eine 1K-Polyurethan-Formulierung auf Basis eines entsprechenden Semipräpolymers zur Verfügung zu stellen, die gut austragbare und gleichzeitig nach dem Aushärten feste Polyurethanschäume liefert, welche auch ohne Zusatz von Flammschutzmitteln und bei niedrigem Gesamthalogengehalt (< 200 ppm) gute Brandeigenschaften und gleichzeitig gute Verarbeitungseigenschaften aufweist. Bevorzugt soll die 1K-Formulierung, zu Montageschaum verarbeitet, im Brandtest die B2-Klassifizierung nach DIN 4102-1 (1998) erhalten.

Die Aufgabe wird gelöst durch ein Einkomponenten-Reaktionssystem zur Herstellung von Polyurethan-Hartschaumstoffen, umfassend die folgenden Bestandteile:
A) eine organische Polyisocyanatkomponente umfassend ein Semipräpolymer,
B) eine isocyanatreaktive Komponente, deren isocyanatreaktive funktionelle Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel, sowie
F) gegebenenfalls Hilfs-, Zusatzstoffe und
wobei das Semipräpolymer durch Umsetzung von
einer organischen Polyisocyanatkomponente A.1), welche zu mindestens 80 Gew.-% aus den monomeren Diphenylmethandiisocyanaten 2,4'-MDI, 2,2'-MDI und/oder 4,4'-MDI (im Folgenden einzeln oder gemeinsam "monomeres MDI" oder "mMDI" genannt) besteht, und
einer Polyolkomponente A.2) mit einer Funktionalität Fₙ (bezogen auf die Zerewitinoff-reaktiven Wasserstoffatome in der Polyolkomponente) von > 2,0 bis < 3,0 und einer OH-Zahl von 28 - 350 mg KOH/g gebildet wird, und
wobei die organische Polyisocyanatkomponente A) weiterhin dadurch gekennzeichnet ist, dass der Gehalt an freien, nicht mit Polyol reagierten Isocyanaten > 1 bis < 25 Gew.-% beträgt, und
der NCO-Gehalt > 7,5 bis ≤ 13 Gew.-%, insbesondere > 8 bis ≤ 13 Gew.-%, bezogen auf das Gesamtgewicht der Komponente A), beträgt.

Mit "Semipräpolymer" im Sinne dieser Anmeldung wird ein Präpolymer bezeichnet, welches durch teilweise Umsetzung einer Isocyanatkomponente mit einer Polyolkomponente erhalten wird und welches noch freie, nicht umgesetzte Anteile der Isocyanatkomponente enthält.

Mit "Funktionalität" oder "Fₙ" einer Komponentenmischung ist im Sinne dieser Anmeldung jeweils die zahlengemittelte Funktionalität gemeint.

Mit "Funktionalität Fₙ" eines Polyols / einer Polyolmischung ist im Sinne dieser Anmeldung die zahlengemittelte Funktionalität der Polyolmischung aus Polyol 1 ... Polyol i gemeint, berechnet mittels Fₙ = ∑xᵢ Fᵢ mit xᵢ = Molenbruch und Fᵢ Starterfunktionalität des Polyols i.

Angaben der OH-Zahl für Mischungen beziehen sich auf die zahlenmittlere OH-Zahl, berechnet aus den OH-Zahlen der einzelnen Komponenten (bestimmt gemäß DIN 53240-1:2013-06.

Die zur Herstellung des Semipräpolymers verwendete organische Polyisocyanatkomponente A.1) enthält mindestens 80 Gew.-%, bevorzugt mindestens 85 Gew.-% und besonders bevorzugt mindestens 95 Gew.-% , bezogen auf das Gesamtgewicht von A.1), monomeres MDI. Daneben kann A.1) in geringen Anteilen weitere organische Isocyanate enthalten, z.B. die höherkernigen MDI - Typen ("oligomeres MDI"), 2,4- und 2,6-Toluylendiisocyanat sowie beliebige Gemische dieser Isomeren ("TDI"), und / oder weitere organische Polyisocyanate der aus der Polyurethanchemie an sich bekannten Art. Sind weitere Polyisocyanate anwesend, handelt es sich bei diesen in einer bevorzugten Ausführungsform um aromatische Polyisocyanate, insbesondere um oligomeres MDI und/oder TDI. In einer besonders bevorzugten Ausführungsform enthält die organische Polyisocyanatkomponente A.1) nur monomeres MDI, bzw. enthält höchstens produktionsbedingt technisch unvermeidbare Spuren an weiteren Isocyanaten.

Die organische Polyisocyanatkomponente A) kann weiterhin organische Polyisocyanate enthalten, welche erst nach der Präpolymerisierungsreaktion zugesetzt werden. Sind weitere Polyisocyanate anwesend, handelt es sich bei diesen in einer bevorzugten Ausführungsform um aromatische Polyisocyanate. Weitere Polyisocyanate werden aber maximal in einer solchen Menge zugesetzt, dass der Gehalt an freien, nicht mit Polyol reagierten Isocyanaten 25 Gew.-% (bezogen auf die Polyisocyanatkomponente A) nicht überschreitet. Besonders bevorzugt werden keine weiteren Polyisocyanate zugesetzt.

Bei der zur Herstellung des Semipräpolymers verwendeten Polyolkomponente A.2) handelt es sich um ein Polyetherpolyol oder um eine Polyolmischung umfassend mindestens ein Polyetherpolyol. In einer bevorzugten Ausführungsform enthält die Polyolmischung nur Polyetherpolyole. Die Polyolkomponente weist eine Funktionalität Fₙ (bezogen auf die Zerewitinoff-reaktiven Wasserstoffatome in der Polyolkomponente) von > 2 bis < 3, bevorzugt von 2,2 bis 2,8 und insbesondere bevorzugt von 2,3 bis 2,7 auf, und eine mittlere OH-Zahl von 28 - 350 mg KOH/g, bevorzugt von 56 bis 300 mg KOH/g, und besonders bevorzugt von 100 bis 280 mg KOH/g.

Bei dem Polyetherpolyol oder den Polyetherpolyolen der Komponente A.2) handelt es sich um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Triethanolamin, Glycerin, Trimethylolpropan, Pentaerythrit, Sorbit und Saccharose. Die Starterverbindungen können allein oder im Gemisch verwendet werden. Die Starterverbindung werden mit einem Alkylenoxid, bevorzugt mit Ethylenoxid und/oder Propylenoxid, hergestellt. Bei Verwendung im Gemisch ist es möglich, die Alkylenoxide statistisch und/oder blockweise umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen b) ablaufen lässt (wie beispielsweise in DE-AS 1 168 075 beschrieben). Auch durch Vinylpolymerisate modifizierte Polyhydroxylverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkomponente b) geeignet. Vertreter der genannten Komponente b) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Daneben kann die Komponente A.2) Anteile an weiteren Polyolen, z.B. Polyesterpolyole, Polyetheresterpolyole, Polycarbonatpolyole und/oder Polyether-Polycarbonatdiole, enthalten. Sind weitere Polyole anwesend, liegt deren Anteil vorzugsweise unter 25 Gew.-%, besonders bevorzugt unter 10 Gew.-% (bezogen auf das Gesamtgewicht der Komponente A.2).

Die organische Polyisocyanatkomponente A) ist weiterhin dadurch gekennzeichnet, dass der Gehalt an freien (d.h. nicht mit Polyol reagierten) Polyisocyanaten > 1 bis < 25 Gew.-%, bevorzugt > 5 bis < 22 Gew.-% , bezogen auf das Gesamtgewicht der Komponente A), beträgt. Hierunter wird im Rahmen der vorliegenden Erfindung verstanden, dass der Mindestgehalt unmittelbar nach dem Vermischen der einzelnen Komponenten des Reaktionssystems eingehalten werden muss. Der Gehalt an freiem Polyisocyanat in einer Polyisocyanatkomponente A), welche über einen Zeitraum von mehreren Tagen gelagert wird, kann sich gegebenenfalls noch verringern.

Weiterhin ist die organische Polyisocyanatkomponente A) dadurch gekennzeichnet, dass der NCO-Gehalt > 7,5 bis ≤ 13 Gew.-%, insbesondere > 8 bis ≤ 13 Gew.-% und besonders bevorzugt > 8 bis 12 Gew.-%, bezogen auf das Gesamtgewicht der Komponente A), beträgt.

Die Herstellung des Semipräpolymers kann im Prinzip auf jede dem Fachmann bekannte Weise erfolgen. In vorteilhafter Ausgestaltung wird diese durch Umsetzung von zumindest einer isocyanatreaktiven Verbindung mit einem Überschuss der organischen Polyisocyanatverbindung A.1), gegebenenfalls gefolgt von teilweisem Abdestillieren der nicht reagierten Polyisocyanatverbindung A.1) bis zum gewünschten Gehalt an freiem Isocyanat, hergestellt. Die Umsetzung der Komponenten A.1) und A.2) kann in Gegenwart einer die Präpolymerisierung katalysierenden Katalysatorkomponente ("Präpolymerisierungskatalysator") erfolgen, bevorzugt erfolgt die Umsetzung jedoch nicht in Gegenwart eines Präpolymerisierungskatalysators bzw. es sind höchstens technisch unvermeidbare Spuren eines Präpolymerisierungskatalysators anwesend.

Der erfindungsgemäße NCO-Gehalt beeinflusst die Viskosität der organischen Polyisocyanatkomponente A) in vorteilhafter Weise, insbesondere weist die organische Polyisocyanatkomponente A) eine Viskosität von 2000 mPa s bis 30000 mPa^{∗}s, bevorzugt 28000 mPa^{∗}s, gemessen bei 50 °C nach DIN 53019 (2008) auf, ganz besonders bevorzugt ist 5000 mPa^{∗}s bis 25000 mPa^{∗}s. Dies ist besonders vorteilhaft, weil solche Polyisocyanatkomponenten A) noch gut weiter verarbeitbar sind.

Bei der isocyanatreaktiven Komponente B) handelt es sich um eine solche Komponente, deren isocyanatreaktive funktionelle Gruppen ausschließlich solche mit wenigstens einem Zerewitinoff-reaktiven Wasserstoffatom sind. Bevorzugt enthält B) mindestens ein Polyol oder besteht aus einem oder mehreren Polyolen, wobei das Polyol bzw. die Polyolmischung insbesondere
- eine (mittlere) OH-Zahl von 100 bis 400 mg KOH/g aufweist, vorzugsweise 150 bis 300 und/ oder
- eine Funktionalität Fₙ von 1bis 4 besitzt, bevorzugt 1,5 bis 3,5, besonders bevorzugt 1,8 bis 3,0, aufweist.

Besonders bevorzugte Polyole sind ausgewählt aus Polyetherpolyolen, Polyesterpolyolen und/ oder Polyetheresterpolyolen, insbesondere aus den oben unter der Komponente A.2) beschriebenen Polyhydroxypolyethern, bevorzugt aus einem Ethylenoxideinheiten aufweisenden Polyol, besonders bevorzugt aus einem Polyethylenpolyol. Vorzugsweise enthalten die Polyole auch keine tertiäre Aminogruppe in der Polymerkette gebunden, da solche Polyole katalytisch aktiv wirken.

Bevorzugt sind Ethylenoxid-reiche Polyetherpolyole mit Fₙ = 2 - 4, insbesondere enthaltend > 50 Gew.-% Ethylenoxid (bezogen auf die Massensumme der enthaltenen Alkylenoxide). Als Starterkomponenten kommen insbesondere solche mit einer Funktionalität zwischen 2 und 4 in Betracht, bevorzugt Glycerin, Trimethylolpropan, Pentaerythrit und Ethylenglykol. Die Starterverbindung werden mit den Alkylenoxiden, bevorzugt mit Ethylenoxid oder Ethylenoxid und Propylenoxid umgesetzt. Dies kann in statistischer und/oder blockweiser Weise erfolgen.

Das Verhältnis von organischer Polyisocyanatkomponente A) und isocyanatreaktiver Komponente B) wird im Reaktionssystem so eingestellt, dass ein Überschuss an Isocyanatgruppen resultiert. Weiterhin enthält das Einkomponenten - Reaktionssystem mindestens einen Schaumstabilisator C). Dabei kann es sich um siliconhaltige Schaumstabilisatoren handeln, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Konensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden. Als Schaumstabilisatoren eignen sich insbesondere solche Stabilisatoren, welche ausgewählt sind aus der Gruppe der Polyether-Polydialkoxysilan-Copolymere, wobei die Alkoxygruppen unabhängig voneinander insbesondere ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

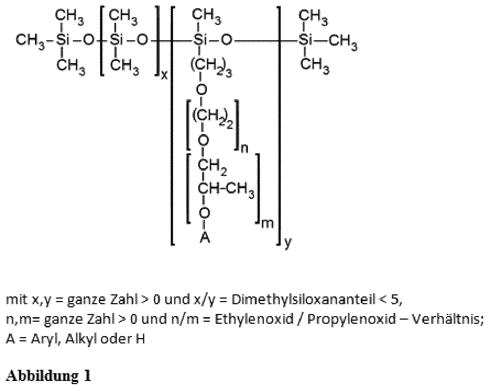

Der Stabilisator C) kann einen Trübungspunkt von wenigstens 40 °C aufweisen, insbesondere von wenigstens 50 °C, vorzugsweise von wenigstens 60 °C, gemessen in einer 4 Gew.-% wässrigen Lösung des Stabilisators und schrittweise Erhöhung der Temperatur von 20 °C startend mit einer Aufheizrate von 2 °C/min und Ermittlung des Trübungspunktes durch optische Beurteilung des Zeitpunktes der einsetzenden Trübung. Dies ist von Vorteil, weil durch Einsatz solcher Stabilisatoren die Brandschutzeigenschaften der erhaltenen Polyurethan-Hartschäume weiter gesteigert werden kann. Die vorgenannten Werte für den Trübungspunkt können alternativ auch nephelometrisch unter Heranziehung der DIN-EN-ISO 7027 bestimmt werden, ohne an die vorgenannte Verfahrensweise mit kombinierter Temperaturänderung gebunden zu sein. Ganz besonders bevorzugt sind solche Stabilisatoren, welche ein hohes Verhältnis von Ethylenoxid zu Propylenoxid in den Polyetherseitenketten der Silikon-Polyether-Copolymere aufweisen und gleichzeitig einen niedrigen (<5) Dimethylsiloxananteil aufweisen. Beispiele hierfür gibt die Strukturformel in Abbildung 1 wieder.

Die in Tabelle 1 angegebenen Strukturmerkmale beziehen sich auf die in Abbildung 1 gezeigte schematische Strukturformel typischer Silikonstabilisatoren. Solche Silikonstabilisatoren sind beispielsweise von den Firmen Schill+Seilacher GmbH oder Evonik Industries AG erhältlich. Von diesen Stabilisatoren sind solche bevorzugt, deren OH-Zahl im Bereich von 90 - 130 mg KOH/g liegt (z.B. Stabilisatoren 1 und 2).

**Tabelle 1**

| | X/Y Dimethylsiloxan Anteil | n/m EO/PO-Verhältnis | OH-Zahl mg KOH/g |
|---|---|---|---|
| Stabilisator 1 | 2,73 | 1,66 | 100 - 130 |
| Stabilisator 2 | 3,64 | 1,89 | 90 - 120 |
| Stabilisator 3 | 9,44 | 0,51 | |
| Stabilisator 4 | 9,4 | 1,09 | |
| Stabilisator 5 | 9,89 | 2,33 | |

Bei dem erfindungsgemäßen Reaktionssystem kann als Katalysator D) prinzipiell jeder für diesen Zweck dem Fachmann als geeignet bekannter Katalysator verwendet werden, beispielsweise ein Aminkatalysator. Insbesondere ist Bis-(morpholino)-diethylether als Katalysator D) bevorzugt, da er besonders selektiv die Reaktion des Isocyanats mit Wasser katalysiert.

Das Reaktionssystem enthält weiterhin wenigstens ein physikalisches Treibmittel mit einem Siedepunkt < 0°C und gegebenfalls Co-Treibmittel E). Als Treibmittel sind Kohlenwasserstoffe bevorzugt, insbesondere die Isomeren des Propan und Butan. Als Co-Treibmittel sind ebenfalls physikalische Treibmittel mit einem Siedepunkt < 0°C bevorzugt, welche zusätzlich noch eine emulgierende oder löslichkeitsvermittelnde Wirkung aufweisen. Bevorzugt wird als Co-Treibmittel Dimethylether eingesetzt.

Das Reaktionssystem kann daneben weitere Hilfs- und Zusatzstoffe E) enthalten, z.B. Flammschutzmittel, Zellregler, Weichmacher und Verdünner, wie z.B. langkettige Chlorparaffine und Paraffine, Pigmente oder Farbstoffe, oberflächenaktive Verbindungen und/oder Stabilisatoren gegen oxidativen, thermischen oder mikrobiellen Abbau bzw. Alterung.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Das Reaktionssystem kann ferner eine Säure, bevorzugt mit einem pKs-Wert von wenigstens 0, oder ein Säurederivat wie z.B. ein Säurechlorid, bevorzugt ein Säurechlorid einer aromatischen Carbonsäure, z.B. Phthalsäuredichlorid, enthalten, insbesondere in einer Menge von 10 bis 500 ppm bezogen auf die Menge an organischer Polyisocyanatkomponente A), vorzugsweise von 50 bis 300 ppm. Durch den Zusatz solcher Verbindungen kann eine Reaktion des Präpolymeren mit sich selbst weitestgehend unterdrückt werden, beispielsweise eine Allophanatisierung.

In einer bevorzugten Ausführungsform enthält das Reaktionssystem keine kurzkettigen Monoole oder Hydroxyketone. Als "kurzkettig" im Sinne dieser Anmeldung werden insbesondere solche Monoole bzw. Hydroxyketone bezeichnet, welche ein Molekulargewicht von < 200 g/mol aufweisen. Solche Verbindungen können als Zellöffner wirken, was hier nicht erwünscht ist.

Überraschenderweise wurde weiterhin gefunden, dass sich mit den erfindungsgemäßen 1K-Reaktionssystemen Hartschäume mit vorteilhaften Brandeigenschaften, insbesondere eine B2 Klassifizierung nach der Brandschutznorm DIN 4102-1 (1998) ohne (nennenswerten) weiteren Zusatz von Flammschutzmitteln einstellen lassen. Das ist vor allem deswegen überraschend, da dem durchschnittlichen Fachmann bekannt ist, dass normale PUR-Hartschäume auf der Basis von monomerem MDI sehr hohe Zusätze (20 - 50 Gew.-% bezogen auf die Polyolformulierung) an Flammschutzmitteln benötigen, um diese Brandanforderungen zu erreichen. Dagegen kommen PUR/PIR-Hartschäume schon mit geringeren Zusätzen wie beispielsweise < 20 Gew.-% bezogen auf die Polyolformulierung an Flammschutzmittel aufgrund der inhärenten flammwidrigeren Eigenschaften des trimerisierten Polymers aus. Insofern enthält nach einer besonders bevorzugten Ausführungsform des erfindungsgemäßen Reaktionssystems dieses weniger als 5 Gew.-% eines Flammschutzmittels, insbesondere eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen. Bevorzugt enthält das Reaktionssystem weniger als 2 Gew.-%, vorzugsweise weniger als 1 Gew.-%, und besonders bevorzugt kein Flammschutzmittel, insbesondere eines Flammschutzmittels ausgewählt aus dieser Gruppe.

Neben den bereits erwähnten ökologischen Vorteilen kann auch durch den Verzicht auf solche Flammschutzmittel die weichmachende Wirkung dieser Flammschutzmittel im aus dem Reaktionssystem erzeugten Schaum vermieden werden.

Ein bevorzugtes erfindungsgemäßes Reaktionssystem enthält oder besteht aus den folgenden Komponenten:
68 bis 90 Gew.-% organische Polyisocyanatkomponente A),
0,5 bis 5 Gew.-% isocyanatreaktive Komponente B),
0,1 bis 1,0 Gew.-% eines Stabilisators C),
0,1 bis 1,0 Gew.-% an Katalysator D) und
10 bis 30 Gew.-% mindestens eines physikalischen Treibmittels mit einem Siedepunkt von weniger als 0 °C sowie gegebenfalls Co-Treibmittel (Komponente E), und
0 bis 20 Gew.-% Hilfs- und Zusatzstoffe (Komponente F),
jeweils bezogen auf das Gesamtgewicht des Reaktionssystems.

Ein weiterer Gegenstand der vorliegenden Erfindung betrifft ein Verfahren zur Herstellung eines erfindungsgemäßen Einkomponenten-Reaktionssystems, umfassend die Schritte
i) Herstellung einer organischen Polyisocyanatkomponente A) mit einem Gehalt an freien, nicht reagierten Isocyanaten von > 1 bis < 25 Gew.-%, und einem NCO-Gehalt von > 7,5 bis ≤ 13 Gew.-%, insbesondere > 8 bis < 13 Gew.-%" jeweils bezogen auf das Gesamtgewicht der Komponente A),
   durch Umsetzung von
   einer organischen Polyisocyanatkomponente A.1), welche zu mindestens 80 Gew.-% aus monomerem MDI besteht, und
   einer Polyolkomponente A.2) mit einer Funktionalität Fₙ (bezogen auf die Zerewitinoff-reaktiven Wasserstoffatome in der Polyolkomponente) von > 2 bis < 3 und einer OH-Zahl von 28 - 300 mg KOH/g
   zu einem Semipräpolymer, und
   (optional) Abmischen des so erhaltenen Semipräpolymers mit weiteren Polyisocyanaten
ii) Umsetzung des in Schritt 1) erhaltenen organische Polyisocyanatkomponente A) mit
   einer isocyanatreaktiven Komponente B), deren isocyanatreaktive funktionelle Gruppen ausschließlich solche mit wenigstens einem Zerewitinoff-reaktiven Wasserstoffatom sind,
   in Anwesenheit von
   mindestens einem Schaumstabilisator C),
   mindestens einem Katalysator D), der geeignet ist, die Reaktion des Semipräpolymers mit der Luftfeuchtigkeit zu katalysieren,
   mindestens einem physikalischen Treibmittel mit einem Siedepunkt von weniger als 0 °C und gegebenenfalls Co-Treibmittel (Komponente E), sowie
   gegebenenfalls Hilfs- und Zusatzstoffen (Komponente F).

Die Erfindung betrifft weiterhin ein Verfahren zur Herstellung eines Hartschaumstoffs umfassend ein Verfahren zur Herstellung eines Einkomponenten-Reaktionssystems mit den Schritten i) und ii) und dem nachfolgenden Schritt
iii) Einwirken von Feuchtigkeit auf das in Schritt 2) hergestellte Einkomponenten-Reaktionssystem.

Die Erfindung betrifft des Weiteren ein Verfahren zur Herstellung von Polyurethan- Hartschaumstoffen, bei dem man die Komponenten A) bis F) eines erfindungsgemäßen Reaktionssystems miteinander vermischt und insbesondere unter Einwirkung von Feuchtigkeit reagieren lässt.

Ein weiterer Gegenstand der vorliegenden Erfindung ist ein Hartschaumstoff, erhältlich durch Vermischen und Umsetzen der Komponenten A) bis E) eines erfindungsgemäßen Reaktionssystems.

Die Erfindung ist auch auf die Verwendung eines erfindungsgemäßen Reaktionssystems als 1-K Montageschaum gerichtet, wobei das Reaktionssystem insbesondere in einen Druckbehälter, wie einen Einwegdruckbehälter, eingefüllt sind.

Schließlich betrifft die Erfindung auch einen Druckbehälter, insbesondere einen Einwegdruckbehälter, enthaltend ein erfindungsgemäßes Reaktionssystem.

In vorteilhafter Weise ist der Druckbehälter mit einem Dosierpistolen- oder Winkelaufsatz (Winkeladapter und Füllröhrchen) ausgerüstet. Als Druckbehälter eignen sich druckstabile Dosen oder gegebenenfalls auch größere Druckbehälter.

Die vorliegende Erfindung wird im Folgenden anhand von Ausführungsbeispielen näher erläutert.

### Experimenteller Teil

Die Herstellung der erfindungsgemäßen PUR-Hartschaumstoffe erfolgt nach einem dem Fachmann bekannten Zweistufenverfahren, bei dem die Reaktionskomponenten diskontinuierlich miteinander zur Reaktion gebracht werden und dann in bzw. auf geeignete Formen/Substrate/Hohlräume zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 284 ff., sowie in K. Uhlig (Hrsg.) "Polyurethan Taschenbuch", Carl Hanser Verlag, 2. Auflage, Wien 2001, S. 83-102 beschrieben.
Messung der Hydroxylzahlen: DIN 53240-1:2013-06
Viskositätsmessungen: DIN 53019 (2008)
Bestimmung des NCO-Gehalts im Polyisocyanat: EN ISO 11909 (2007)
Der Gehalt an freiem (nicht mit Polyol reagierten) Isocyanat im Semipräpolymer wurde bestimmt nach einer validierten HPLC-Methode des externen Prüfinstituts Currenta GmbH & Co. OHG
Zahlengemittelte Funktionalität der Polyolmischung Fₙ: ist die mittlere Funktionalität in der Polyolmischung aus Polyol 1 ... Polyol i, berechnet mittels Fₙ = ∑xᵢ Fᵢ mit xᵢ = Molenbruch und Fᵢ Starterfunktionalität des Polyol i

### 1. Herstellung der Semipräpolymere

**Einsatzstoffe:**

| | |
|---|---|
| Polyol 1 | Glycerin-gestarteter Propylenoxidpolyether, Äqivalentgewicht 243, OH-Zahl 235 mg KOH/g, Viskosität bei 25°C 250 mPas |
| Polyol 2 | linearer, Propylenglykol gestarteter Propylenoxidpolyether, Äqivalentgewicht 506, OH-Zahl 112 mg KOH/g, Viskosität bei 25°C 140 mPas |
| Polyol 3 | linearer, Propylenglykol gestarteter PO-Polyether, Äqivalentgewicht 216, OH-Zahl 260 mg KOH/g, Viskosität 70 mPas bei 25°C |
| Polyol 4 | Glycerin-gestarteter Propylenoxidpolyether, Äqivalentgewicht 1001, OH-Zahl 56 mg KOH/g, Viskosität bei 25°C 480 mPas |
| Isocyanat 1 | Desmodur 44M; 4,4'-Diphenylmethadiisocyanat; NCO-Gehalt 33,6 Gew.-%, (Covestro Deutschland AG) |
| Isocyanat 2 | Desmodur 44V20L; polymeres MDI (Mischung aus monomerem und oligomerem MDI), Viskosität 200mPas bei 25°C, NCO-Gehalt 31,5 Gcw.-% (Covestro Deutschland AG), Gehalt an mMDI 43 Gew.-%, zahlenmittlere Isocyanat - Funktionalität 2,8; |

In einem 51-Dreihalskolben mit Gaseinlass, Rückflusskühler, Rührer und Tropftrichter wird die benötigte Isocyanatmenge vorgelegt (siehe Tabelle 2), mit Stickstoff beaufschlagt und unter Rühren auf eine Temperatur von 80°C aufgeheizt. Unter Einhalten dieser Temperatur wird das bzw. die Polyole (Tabelle 2) zugegeben. Das Gemisch wird über 2 Stunden bei dieser Temperatur zur Vervollständigung des Umsatzes gerührt. Zur Charakterisierung des Produkts werden der NCO-Gehalt und die Viskosität bestimmt. Die Rezepturen sind der folgenden Tabelle 2 zu entnehmen.

**Tabelle 2**

| **Rezeptur** | | **1** | **2** | **3*** | **4*** | **5*** | **6*** | **7*** | **8*** | **9*** |
|---|---|---|---|---|---|---|---|---|---|---|
| Isocyanat 1 | Gew.-% | 45,0 | 50,5 | 54,9 | 36,0 | 47,55 | 48,3 | 30,6 | 42,8 | 37,0 |
| Isocyanat 2 | Gew.-% | | | | 20 | | | 15,09 | | |
| Gehalt an mMDI in der Polyisocyanatkomponenten | Gew.-% | 100 | 100 | 100 | 79,6 | 100 | 100 | 81,2 | 100 | 100 |
| Polyoll | Gew.-% | 22,44 | 20,18 | 18,4 | 17,95 | | 30,9 | | 23,32 | 25,7 |
| Polyol 2 | Gew.-% | 32,54 | 29,32 | 26,7 | 26,03 | 24,81 | | 36,45 | 33,85 | 37,3 |
| Polyol 3 | Gew.-% | | | | | 27,64 | | 17,81 | | |
| Polyol 4 | Gew.-% | | | | | | 20,8 | | | |
| Summe | Gew.-% | 100 | 100 | 100 | 100 | 100 | 100 | 100 | 100 | 100 |
| NCO-Gehalt [%] | Gew.-% | 8,1 | 10,4 | 12,4 | 12,8 | 8,1 | 9,6 | 8,1 | 7,5 | 4,9 |
| Viskosität bei 50°C | mPas | 16000 | 4950 | 1700 | 4500 | 14800 | 20500 | 15200 | 28500 | 281000 |
| Fₙ (Polyolmischung) | -- | 2,5 | 2,5 | 2,5 | 2,5 | 2,0 | 3,0 | 2,0 | 2,5 | 2,5 |
| Freies Isocyanat im Semipräpolymer | Gew.-% | 14,3 | 21,3 | 27,3 | 25,9 | 13,5 | 18,3 | 12,6 | n.b. | 4,8 |

| | | | | | | | | | | |
|---|---|---|---|---|---|---|---|---|---|---|
| *Vergleichsbeispiele | | | | | | | | | | |

Die Semipräpolymere 1 - 7 werden als Polyisocyanatkomponente A zur Herstellung der Einkomponenten-Reaktionssysteme eingesetzt (es werden keine weiteren Polyisocyanate zugesetzt). Die Semipräpolymere der Vergleichsbeispiele 8 und 9 mit einem NCO-Gehalt ≤ 7,5 Gew.-% weisen hohe Viskositäten auf, so dass sie sich nicht vorteilhaft zu einem erfindungsgemäßen Reaktionssystem umsetzen lassen.

### 2. Herstellung der 1K-Formulierungen in Einweg-Druckbehältern

**Einsatzstoffe:**

| | |
|---|---|
| Polyol 5 | Polyethylenglykol, OH-Zahl 190 mg KOH/g, Viskosität bei 25°C: 122 mPas |
| DMDEE | 2,2-Dimorpholindimethylether (AirProducts) |
| iso-Butan | Treibmittel (Merck) |
| Dimethylether | Co-Treibmittel (Merck) |
| Semipräpolymer | siehe korrespondierende Versuchsnummer in Tabelle 2 |

Zur Herstellung der 1K-Formulierungen in Einweg-Druckbehältern wurden nacheinander die benötigten Mengen des jeweiligen Semipräpolymers (Beispiel 1 - Beispiel 8) in einem Mischbehälter vorgelegt und mit entsprechenden Mengen des Stabilisators, des Aminkatalysators und eines weiteren Polyols vermischt (siehe Tabelle 3). Anschließend wurde die Mischung in einen Einweg-Druckbehälter überführt und dieser dicht verschlossen. Sofern nicht anders angegeben, wurden von den in der Tabelle aufgeführten 1K-Formulierungen je 500ml in Einweg-Druckbehälter mit einem Fassungsvermögen von 1000 ml gefüllt. Über das aufgesetzte Ventil wurden mittels einer entsprechenden Dosiereinheit die benötigten Mengen der Treibgase zugesetzt. Abschließend wurde der Einweg-Druckbehälter bis zur vollständigen Homogenisierung der 1K-Formulierung geschüttelt. Die so hergestellten 1K-Formulierungen sind nachfolgend in den Beispielen der folgenden Tabelle 3 angegeben.

### Herstellung von Polyurethan-Freischäumen (PUR-Hartschäume):

Nach der Lagerung des mit der 1K-Formulierung gefüllten Einweg-Druckbehälters erfolgt der Austrag auf eine mit Wasser besprühte Papierlage (PE-beschichtetes Natronkraftpapier, 130 g/m², 595 x 160 mm²). Hierzu wird der Druckbehälter über Kopf in einer langsamen, linienziehenden Bewegung ohne Unterbrechung über das Papier geführt. Der Schaum expandiert unter den aktuell vorherrschenden Bedingungen (Raumtemperatur, Normaldruck). Die zur Aushärtung erforderliche Feuchtigkeit wird über das Besprühen des Papiers mit Wasser geliefert. Diese Verfahrensweise liefert die reproduzierbarsten Ergebnisse, da sie somit unabhängig von den jeweiligen vorherrschenden Luftfeuchtigkeiten ist.

### Messung der Klebfreizeit:

Nach erfolgtem Austrag wird die Klebfreizeit der Schaumoberfläche nach TM 1014:2013 (FEICA) ermittelt.

### Bewertung der Zellgröße:

Die Zellgröße wird generell einen Tag nach erfolgtem Austrag am Freischaum subjektiv bewertet. Hierzu liegen dem in dieser Methodik erfahrenen Mitarbeiter entsprechende Vergleichsmuster vor, anhand derer die Bewertung gemäß eines Schulnotensystems vorgenommen wird. Daher bedeuten die hierzu angegebenen Zahlen: 1 = sehr gut, 2 = gut, 3 = befriedigend, 4 = ausreichend, 5 = mangelhaft, 6 = ungenügend.

### Herstellung von Prüfkörpern zur Messung der Brandeigenschaften:

Die Brandeigenschaften werden an geschäumten Formteilen hergestellt. Hierzu wird ein in der Länge rechts und links mit Gipskartonplatten (700 x 90 x 12,5 mm³) ausgekleideter, nach oben offener Schacht (700 x 90 x 55 mm³) mit einem einzigen, ununterbrochenen Austrag ausgeschäumt. Die über die Länge von 700 mm oben überstehende Schaumfront wird so abgetrennt, dass die Schaumschicht mit den Gipskartonplatten abschließt. Somit ergeben sich 700 mm lange und 90 mm hohe Sandwichelemente, die über die Dicke verteilt folgenden lagigen Aufbau haben: Gipskarton (12,5 mm), PUR-Schaum (30 mm), Gipskarton (12,5 mm). Diese Elemente werden auf 190 mm abgelängt und einer Brandprüfung unterzogen. Dazu wird ein Kleinbrennertest gemäß DIN 4102-1 (1998) (Kantenbeflammung) durchgeführt.

### Bestimmung der Schwindung / Dimensionsstabilität:

Der Schaum wird aus der Dose in eine Form (600x30x60mm LxHxB) ausgetragen, welche mit Papier ausgekleidet ist. Nach 1 Tag wird der entstandene Schaumstrang aus der Form entnommen. In der Mitte des Stranges (bei 300mm) wird die Dicke mit einem Dickenmesser gemessen. Das Verhältnis von Schaumstrangdicke zur Formbreite (30mm) stellt die Dimensionsstabilität (Schwindung/Quellung) dar. Diese Messung wird nach 1 Woche am gleichen Schaumstrang wiederholt.

Alle Ergebnisse zu den gemäß der vorliegenden Anmeldung hergestellten 1-K Reaktionssystemen sowie den hieraus hergestellten Polyurethan (PUR)-Hartschäumen (Freischäumen) und deren Eigenschaften sind in der folgenden Tabelle 3 zusammengefasst.

**Tabelle 3**

| 1K - Reaktionssystem | Nr. | **10*** | **11*** | **12*** | **13*** | **14*** | **15*** | **16*** |
|---|---|---|---|---|---|---|---|---|
| Semipräpolymer aus Beispiel | Nr | 1 | 2 | 3* | 4* | 5* | 6* | 7* |
| | Gew.-% | 73,7 | 73,3 | 73,0 | 73,0 | 73,7 | 73,5 | 73,7 |
| Polyol 5 | Gew.-% | 0,89 | 1,13 | 1,34 | 1,38 | 0,87 | 1,04 | 0,88 |
| Stabilisator 1 | Gew.-% | 0,27 | 0,34 | 0,40 | 0,41 | 0,26 | 0,31 | 0,26 |
| DMDEE | Gew.-% | 0,36 | 0,45 | 0,54 | 0,55 | 0,35 | 0,42 | 0,35 |
| iso-Butan | Gew.-% | 15,3 | 15,3 | 15,3 | 15,3 | 15,3 | 15,3 | 15,3 |
| Dimethylether | Gew.-% | 9,5 | 9,5 | 9,5 | 9,4 | 9,5 | 9,5 | 9,5 |
| Dose ges. | | 100,0 | 100,0 | 100,0 | 100,0 | 100,0 | 100,0 | 100,0 |
| Freier Isocyanatgehalt Semipräpolymer | | 14,3 | 21,3 | 27,3 | 25,9 | 13,5 | 18,3 | 12,6 |

| Eigenschaften der daraus hergestellten Polyurethan-Freischäume | | | | | | | | |
|---|---|---|---|---|---|---|---|---|
| Klebfreizeit | min. | 6 | 4 | 4 | 6 | 9 | 5 | 9 |
| Zellgröße | 1-6 | 2 | 2 | 1 | 2 | | 1-2 | 2 |
| Schwindung nach 4h | | keine | keine | keine | keine | n.d. | leichte | keine |
| Dimensionsstabilität nach 1d | % | -6,7 | -3,3 | -11,7 | -3 | n.d. | -25,33 | - 3,3 |
| Dimensionsstabilität nach 7d | % | -5 | -4 | -12,3 | -4 | n.d. | -3,33 | -0,67 |
| | | | | | | | | |
| Brandeigenschaften Flammhöhe | mm | 103/ 127 | 150 | - | 203 | - | 263 | 290 |
| Brandklasse B2** | | **Ja** | **Ja** | Nein | Nein | Nein | Nein | nein |

| | | | | | | | | |
|---|---|---|---|---|---|---|---|---|
| *Vergleichsbeispiele ** gemäß DIN 4102-1(1998) | | | | | | | | |

## Patentansprüche

1. Einkomponenten-Reaktionssystem zur Herstellung von Polyurethan-Hartschaumstoffen, umfassend die folgenden Bestandteile:
A) eine organische Polyisocyanatkomponente umfassend ein Semipräpolymer,
B) eine isocyanatreaktive Komponente, deren isocyanatreaktive funktionelle Gruppen ausschließlich solche mit wenigstens einem Zerewitinoff-reaktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel, sowie
F) gegebenenfalls Hilfs-, Zusatzstoffe und
wobei das Semipräpolymer durch Umsetzung von
einer organischen Polyisocyanatkomponente A.1), welche zu mindestens 80 Gew.-% aus monomerem Diphenylmethandiisocyanat besteht, und
einer Polyolkomponente A.2) mit einer Funktionalität Fₙ (bezogen auf die Zerewitinoff-reaktiven Wasserstoffatome in der Polyolkomponente) von > 2,0 bis < 3,0 und einer OH-Zahl von 28 - 350 mg KOH/g gebildet wird, und
wobei die organische Polyisocyanatkomponente A) weiterhin **dadurch gekennzeichnet ist, dass** der Gehalt an freien, nicht mit Polyol reagierten Isocyanaten > 1 bis < 25 Gew.-% beträgt, und
der NCO-Gehalt > 7,5 bis ≤ 13 Gew.-% bezogen auf das Gesamtgewicht der Komponente A), beträgt.

2. Einkomponenten-Reaktionssystem gemäß Anspruch 1, **dadurch gekennzeichnet, dass** die Polyolkomponente A.2) eine Funktionalität Fₙ von 2,2 bis 2,8 aufweist.

3. Einkomponenten- Reaktionssystem gemäß Anspruch 1 oder 2, **dadurch gekennzeichnet, dass** der NCO-Gehalt > 8 bis ≤ 13 Gew.-%, bezogen auf das Gesamtgewicht der Komponente A), beträgt.

4. Einkomponenten-Reaktionssystem gemäß einem der Ansprüche 1, 2 oder 3, **dadurch gekennzeichnet, dass** die isocyanatreaktive Komponente B) ein Polyetherpolyol mit einer Funktionalität Fₙ von 2 bis 4 und mit einem Ethylenoxid - Anteil von > 50 Gew.-% (bezogen auf die Massensumme der enthaltenen Alkylenoxide) enthält.

5. Einkomponenten-Reaktionssystem gemäß einem der Ansprüche 1 - 4, **dadurch gekennzeichnet, dass** als Stabilisatoren solche mit einer Strukturformel 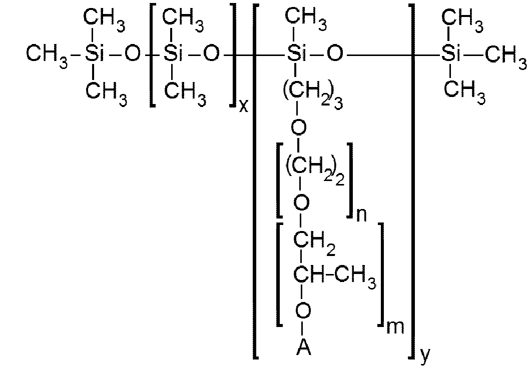
mit x, y = ganze Zahl > 0 und x/y = Dimethylsiloxananteil < 5,
n, m= ganze Zahl > 0 und n/m = Ethylenoxid / Propylenoxid - Verhältnis;
A = Aryl, Alkyl oder H
eingesetzt werden.

6. Einkomponenten-Reaktionssystem nach einem der vorstehenden Ansprüche, **dadurch gekennzeichnet, dass** das Einkomponenten-Reaktionssystem weniger als 5 Gew.-% eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält.

7. Einkomponenten-Reaktionssystem nach einem der vorstehenden Ansprüche umfassend die folgenden Komponenten:
68 bis 90 Gew.-% organische Polyisocyanatkomponente A),
0,5 bis 5 Gew.-% isocyanatreaktive Komponente B),
0,1 bis 1,0 Gew.-% eines Stabilisators C),
0,1 bis 1,0 Gew.-% an Katalysator D) und
10 bis 30 Gew.-% mindestens eines physikalischen Treibmittels mit einem Siedepunkt von weniger als 0 °C sowie gegebenfalls Co-Treibmittel (Komponente E), und
0 bis 20 Gew.-% Hilfs- und Zusatzstoffe (Komponente F),
jeweils bezogen auf das Gesamtgewicht des Reaktionssystems.

8. Verfahren zur Herstellung eines Einkomponenten-Reaktionssystems, umfassend die Schritte
i) Herstellung einer organischen Polyisocyanatkomponente A) mit einem Gehalt an freien, nicht reagierten Isocyanaten von > 1 bis < 25 Gew.-%, und einem NCO-Gehalt von > 8 bis 13 Gew.-%, jeweils bezogen auf das Gesamtgewicht der Komponente A),
durch Umsetzung von
a) einer organischen Polyisocyanatkomponente A.1), welche zu mindestens 80 Gew.-% aus monomerem MDI besteht, und
b) einer Polyolkomponente A.2) mit einer Funktionalität Fₙ (bezogen auf die Zerewitinoff-reaktiven Wasserstoffatome in der Polyolkomponente) von > 2 bis < 3 und einer OH-Zahl von 28 - 300 mg KOH/g
zu einem Semipräpolymer, und
(optional) Abmischen des so erhaltenen Semipräpolymers mit weiteren Polyisocyanaten
ii) Umsetzung des in Schritt 1) erhaltenen organische Polyisocyanatkomponente
A) mit
B) einer isocyanatreaktiven Komponente, deren isocyanatreaktive funktionelle Gruppen ausschließlich solche mit wenigstens einem Zerewitinoff-reaktiven Wasserstoffatom sind,
in Anwesenheit von
C) mindestens einem Schaumstabilisator,
D) mindestens einem Katalysator, der geeignet ist, die Reaktion des Semipräpolymers mit der Luftfeuchtigkeit zu katalysieren,
E) mindestens einem physikalischen Treibmittel mit einem Siedepunkt von weniger als 0 °C und gegebenenfalls Co-Treibmittel, sowie
F) gegebenenfalls Hilfs- und Zusatzstoffen.

9. Verfahren zur Herstellung eines Hartschaumstoffs, erhältlich durch Vermischen und Umsetzen der Komponenten A) - F) eines Einkomponenten-Reaktionssystems nach einem der Ansprüche 1 bis 7 unter Einwirkung von Feuchtigkeit.

10. Verfahren zur Herstellung eines Hartschaumstoffs, umfassend die Schritte
a) Herstellung eines Einkomponenten-Reaktionssystems nach einem Verfahren gemäß Anspruch 8 und
b) Einwirken von Feuchtigkeit auf das in Schritt a) hergestellte Einkomponenten-Reaktionssystem.

11. Hartschaumstoff, erhältlich nach einem Verfahren gemäß Anspruch 9 oder 10.

12. Hartschaumstoff gemäß Anspruch 11, **dadurch gekennzeichnet, dass** er weniger als 5 Gew.-% eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält, und gleichzeitig eine Brandklassifizerung B2 nach der Brandschutznorm DIN 4102-1(1998) erzielt.

13. Verwendung eines Einkomponenten-Reaktionssystems nach einem der Ansprüche 1 bis 7 als 1-K Montageschaum, wobei das Einkomponenten-Reaktionssystem in einen Druckbehälter eingefüllt ist.

14. Druckbehälter, insbesondere ein Einwegdruckbehälter, enthaltend ein Einkomponenten-Reaktionssystem nach einem der Ansprüche 1 bis 7.

15. Verwendung von Hartschaumstoffen gemäß Anspruch 11 oder 12 für Anwendungen in der Bauindustrie.

## Claims

1. One-component reaction system for producing rigid polyurethane foams, comprising the following constituents:
A) an organic polyisocyanate component comprising a semiprepolymer,
B) an isocyanate-reactive component whose isocyanate-reactive functional groups are exclusively groups having at least one Zerewitinoff-reactive hydrogen atom,
C) at least one foam stabilizer,
D) at least one catalyst which is suitable for catalyzing the reaction of the semiprepolymer with atmospheric moisture,
E) at least one physical blowing agent having a boiling point of less than 0°C and optionally co-blowing agent and
F) optionally auxiliaries and/or additives,
wherein the semiprepolymer is formed by reaction of an organic polyisocyanate component A.1) which consists to an extent of at least 80% by weight of monomeric diphenylmethane diisocyanate and
a polyol component A.2) having a functionality Fₙ (based on the Zerewitinoff-reactive hydrogen atoms in the polyol component) of from > 2.0 to < 3.0 and an OH number of 28 - 350 mg KOH/g and
wherein the organic polyisocyanate component A) is additionally **characterized in that** the content of free isocyanates which have not reacted with polyol is > 1 to < 25% by weight and
the NCO content is from > 7.5 to ≤ 13% by weight, based on the total weight of the component A).

2. One-component reaction system according to Claim 1, **characterized in that** the polyol component A.2) has a functionality Fₙ of from 2.2 to 2.8.

3. One-component reaction system according to Claim 1 or 2, **characterized in that** the NCO content is from > 8 to ≤ 13% by weight, based on the total weight of the component A).

4. One-component reaction system according to any of Claims 1, 2 or 3, **characterized in that** the isocyanate-reactive component B) contains a polyether polyol having a functionality Fₙ of from 2 to 4 and having a proportion of ethylene oxide of > 50% by weight (based on the total mass of the alkylene oxides present).

5. One-component reaction system according to any of Claims 1-4, **characterized in that** stabilizers having a structural formula 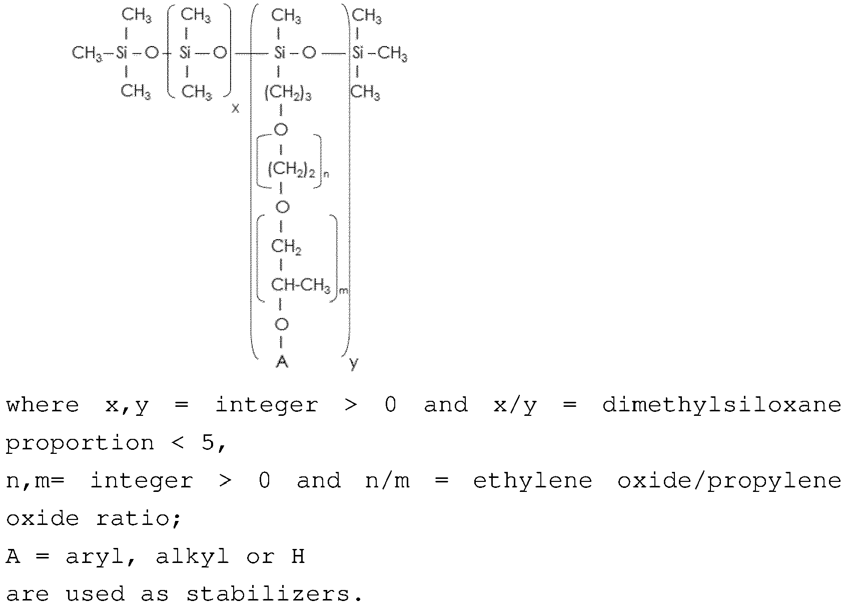
where x, y = integer > 0 und x/y = dimethylsiloxane proportion < 5,
n, m= interger > 0 and n/m = ethylene oxide/propylene oxide ration;
A = aryl, alkyl or H
are used as stablizers.

6. One-component reaction system according to any of the preceding claims, **characterized in that** the one-component reaction system contains less than 5% by weight of a flame retardant selected from the group of compounds consisting of halogenated phosphates, aryl phosphates, alkyl phosphates, alkyl aryl phosphates, phosphonates and flame retardants without groups which are reactive toward polyisocyanates and/or toward polyols.

7. One-component reaction system according to any of the preceding claims comprising the following components:
from 68 to 90% by weight of organic polyisocyanate component A),
from 0.5 to 5% by weight of isocyanate-reactive component B),
from 0.1 to 1.0% by weight of a stabilizer C),
from 0.1 to 1.0% by weight of catalyst D) and
from 10 to 30% by weight of at least one physical blowing agent having a boiling point of less than 0°C and optionally co-blowing agent (component E) and
from 0 to 20% by weight of auxiliaries and additives (component F),
in each case based on the total weight of the reaction system.

8. Process for producing a one-component reaction system, comprising the steps
i) preparation of an organic polyisocyanate component A) having a content of free, unreacted isocyanates of from > 1 to < 25% by weight and an NCO content of from > 8 to 13% by weight, in each case based on the total weight of the component A), by reacting
a) an organic polyisocyanate component A.1) which consists to an extent of at least 80% by weight of monomeric MDI and
b) a polyol component A.2) having a functionality Fₙ (based on the Zerewitinoff-reactive hydrogen atoms in the polyol component) of from > 2 to < 3 and an OH number of 28 - 300 mg KOH/g
to give a semiprepolymer, and
(optionally) mixing the resulting semiprepolymer with further polyisocyanates
ii) reaction of the organic polyisocyanate component
A) obtained in step 1) with
B) an isocyanate-reactive component whose isocyanate-reactive functional groups are exclusively groups having at least one Zerewitinoff-reactive hydrogen atom
in the presence of
C) at least one foam stabilizer,
D) at least one catalyst which is suitable for catalyzing the reaction of the semiprepolymer with atmospheric moisture,
E) at least one physical blowing agent having a boiling point of less than 0°C and optionally co-blowing agent and also
F)optionally auxiliaries and additives.

9. Process for producing a rigid foam obtainable by mixing and reacting the components A)-F) of a one-component reaction system according to any of Claims 1 to 7 in the presence of moisture.

10. Process for producing a rigid foam, which comprises the steps
a) production of a one-component reaction system by a process according to Claim 8 and
b) action of moisture on the one-component reaction system produced in step a).

11. Rigid foam obtainable by a process according to Claim 9 or 10.

12. Rigid foam according to Claim 11, **characterized in that** it contains less than 5% by weight of a flame retardant selected from the group of compounds consisting of halogenated phosphates, aryl phosphates, alkyl phosphates, alkyl aryl phosphates, phosphonates and flame retardants without groups which are reactive toward polyisocyanates and/or toward polyols and at the same time achieves a burning classification B2 according to the fire protection standard DIN 4102-1(1998).

13. Use of a one-component reaction system according to any of Claims 1 to 7 as 1-component installation foam, wherein the one-component reaction system has been introduced into a pressure vessel.

14. Pressure vessel, in particular a disposable pressure vessel, containing a one-component reaction system according to any of Claims 1 to 7.

15. Use of rigid foams according to Claim 11 or 12 for applications in the building industry.

## Revendications

1. Système de réaction à un composant pour la préparation de mousses dures de polyuréthane, comprenant les ingrédients suivants :
A) un composant organique de polyisocyanate comprenant un semi-prépolymère,
B) un composant réactif envers isocyanate, dont les groupes fonctionnels réactifs envers isocyanate sont exclusivement ceux comportant au moins un atome d'hydrogène réactif selon Zéréwitinoff,
C) au moins un stabilisateur de mousse,
D) au moins un catalyseur qui est approprié pour catalyser la réaction du semi-prépolymère avec l'humidité de l'air,
E) au moins un propulseur physique comportant un point d'ébullition inférieur à 0 °C et éventuellement un co-propulseur, ainsi que
F) éventuellement des adjuvants, des additifs et le semi-prépolymère étant formé par transformation d'un composant organique A.1) de polyisocyanate, qui est constitué à raison d'au moins 80 % en poids de diisocyanate de diphénylméthane monomérique, et
d'un composant de polyol A.2) doté d'une fonctionnalité Fₙ (par rapport aux atomes d'hydrogène réactifs selon Zéréwitinoff dans le composant de polyol) de > 2,0 à < 3,0 et d'un indice d'OH de 28 à 350 mg de KOH/g, et
le composant organique A) de polyisocyanate étant de plus **caractérisé en ce que** la teneur en isocyanates libres n'ayant pas réagi avec le polyol est de > 1 à < 25 % en poids, et
la teneur en NCO est > 7,5 et ≤ 13 % en poids par rapport au poids total du composant A).

2. Système de réaction à un composant selon la revendication 1, **caractérisé en ce que** le composant de polyol A.2) présente une fonctionnalité Fₙ de 2,2 à 2,8.

3. Système de réaction à un composant selon la revendication 1 ou 2, **caractérisé en ce que** la teneur en NCO est > 8 et ≤ 13 % en poids, par rapport au poids total du composant A).

4. Système de réaction à un composant selon l'une quelconque des revendications 1, 2 ou 3, **caractérisé en ce que** le composant B) réactif envers isocyanate contient un polyétherpolyol doté d'une fonctionnalité Fₙ de 2 à 4 et doté d'une proportion en oxyde d'éthylène de > 50 % en poids (par rapport à la somme des masses des oxydes alkylène contenus).

5. Système de réaction à un composant selon l'une quelconque des revendications 1 à 4, **caractérisé en ce qu'**en tant que stabilisateurs, ceux dotés d'une formule structurale 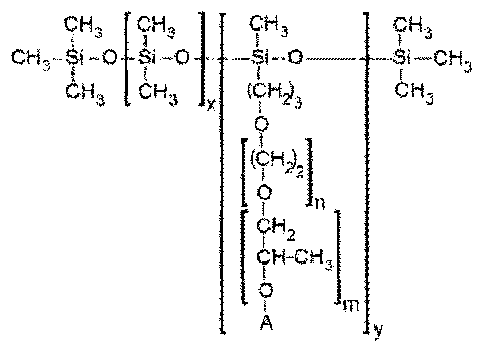
avec x, y = nombre entier > 0 et x/y = proportion en diméthylsiloxane < 5,
n, m = nombre entier > 0 et n/m = rapport oxide d'éthylène/oxide de propylène ;
A = aryle, alkyl ou H,
sont utilisés.

6. Système de réaction à un composant selon l'une quelconque des revendications précédentes, **caractérisé en ce que** le système de réaction à un composant contient moins de 5 % en poids d'un agent ignifugeant choisi dans le groupe de composés constitué par les phosphates halogénés, les arylphosphates, les alkylphosphates, les alkyl-aryl-phosphates, les phosphonates ainsi que les agents ignifugeants sans groupes réactifs envers des polyisocyanates et/ou envers des polyols.

7. Système de réaction à un composant selon l'une quelconque des revendications précédentes comprenant les composants suivants :
68 à 90 % en poids du composant organique A) de polyisocyanate,
0,5 à 5 % en poids du composant B) réactif envers isocyanate,
0,1 à 1,0 % en poids d'un stabilisateur C),
0,1 à 1,0 % en poids d'un catalyseur D) et
10 à 30 % en poids d'au moins un propulseur physique doté d'un point d'ébullition inférieur à 0 °C ainsi que d'éventuels co-propulseurs (composant E), et
0 à 20 % en poids d'adjuvants et d'additifs (composant F),
à chaque fois par rapport au poids total du système de réaction.

8. Procédé pour la préparation d'un système de réaction à un composant, comprenant les étapes de
i) préparation d'un composant organique A) de polyisocyanate doté d'une teneur en isocyanates libres n'ayant pas réagi de > 1 à < 25 % en poids, et d'une teneur en NCO de > 8 à ≤ 13 % en poids, à chaque fois par rapport au poids total du composant A),
par transformation
a) d'un composant organique A.1) de polyisocyanate, qui est constitué d'au moins 80 % de monomères MDI, et
b) d'un composant de polyol A.2) doté d'une fonctionnalité Fₙ (par rapport aux atomes d'hydrogène réactifs selon Zéréwitinoff dans le composant de polyol) de > 2 à < 3 et d'un indice d'OH de 28 à 300 mg de KOH/g,
pour donner un semi-prépolymère, et
(éventuellement) mixage du semi-prépolymère ainsi obtenu avec d'autres polyisocyanates
ii) transformation du composant organique
A) de polyisocyanate obtenu dans l'étape 1) avec
B) un composant réactif envers isocyanate, dont les groupes fonctionnels réactifs envers isocyanate sont exclusivement ceux comportant au moins un atome d'hydrogène réactif selon Zéréwitinoff,
en présence de
C) au moins un stabilisateur de mousse,
D) au moins un catalyseur, qui est approprié pour catalyser la réaction du semi-prépolymère avec l'humidité de l'air,
E) au moins un propulseur physique comportant un point d'ébullition inférieur à 0 °C et éventuellement un co-propulseur, ainsi que
F) éventuellement des adjuvants et des additifs.

9. Procédé pour la préparation d'une mousse dure, pouvant être obtenue par mélange et transformation des composants A) à F) d'un système de réaction à un composant selon l'une quelconque des revendications 1 à 7 sous l'action d'humidité.

10. Procédé pour la préparation d'une mousse dure, comprenant les étapes de
a) préparation d'un système de réaction à un composant selon un procédé selon la revendication 8 et
b) action d'humidité sur le système de réaction à un composant préparé dans l'étape a).

11. Mousse dure, pouvant être obtenue selon un procédé selon la revendication 9 ou 10.

12. Mousse dure selon la revendication 11, **caractérisée en ce qu'**elle contient moins de 5 % en poids d'un agent ignifugeant choisi dans le groupe de composés constitué par les phosphates halogénés, les arylphosphates, les alkylphosphates, les alkyl-aryl-phosphates, les phosphonates ainsi que les agents ignifugeants sans groupes réactifs envers des polyisocyanates et/ou envers des polyols, et en même temps atteint une classification de résistance au feu B2 d'après la norme de protection incendie DIN 4102-1 (1998).

13. Utilisation d'un système de réaction à un composant selon l'une quelconque des revendications 1 à 7 en tant que mousse de montage 1-K, le système de réaction à un composant étant rempli dans un récipient sous pression.

14. Récipient sous pression, en particulier récipient sous pression à usage unique, contenant un système de réaction à un composant selon l'une quelconque des revendications 1 à 7.

15. Utilisation de mousses dures selon la revendication 11 ou 12 pour des applications dans l'industrie de la construction.
